# EUROPEAN PATENT APPLICATION

(11) **EP 3 067 111 A1**
(43) Date of publication of application: **14.09.2016**
(21) Application number: 15000725.0
(22) Date of filing: 12.03.2015
(51) Int. Cl.: B01F 3/04, B01F 15/04, F16K 21/06

(54) **Device for aerating wine**

(71) Applicant: Linde Aktiengesellschaft, 80331 München (DE)
(72) Inventor: Tatarek, Andrew Richard Thomas, Aldershot, GU11 3HR (GB); Holbeche, Thomas Bickford, Church Crookham Hampshire, GU52 8TJ (GB)
(74) Representative: Gellner, Bernd

(57) **Abstract**

The present invention relates to a wine aerating device comprising a body member (10), adapted to hold a container (12) containing pressurized gas and a lance member (14) for diffusing pressurized gas into a wine to be aerated, the body member (10) being provided with a passage (102, 103, 121, 105, 104) for passing a flow of pressurized gas from the container (12) to the lance member (14), comprising a comprising a control mechanism (23) for providing a flow of pressurized gas from the body member (10) to the lance member (14) over a variable length of time, the duration of which can be manually set by a user, **wherein** the control mechanism (23) comprises a valve (24), the valve being adapted to be manually actuated by rotary movement of a collar (20) provided on body member (10).

## Description

The present invention relates to a device for aerating or oxygenating wine.

Adding controlled amounts of oxygen to wine (also known as aerating the wine) is known to improve its taste. Typically, wine is aerated before use via a decanter or carafe. In a recent development wine can also be aerated using a venturi type system whereby the wine is poured from the bottle into an intermediary vessel above the wine glass, and the wine then aerated via the venturi effect as it passes from the intermediary vessel to the wine glass. Both of these aerating methods however are limited in terms of the rate of which air can be introduced into the wine.

It is also known to aerate wine using pressurized gas containing oxygen, e.g. pressurized air. A container containing pressurized gas is particularly provided as a gas cylinder. Herein, the gas from the gas cylinder is diffused into the wine in a controlled manner via a diffusion member, typically provided as a lance member.

Depending on the type of wine to be aerated, different amounts of oxygen are preferably diffused. For example, more complex red wines will usually require greater amounts of oxygen than some white wines. Therefore, it is an advantageous feature of wine aerating devices to be provided with means for controlled dosage of predeterminable amounts of oxygen.

The invention attempts to facilitate the handling of wine aerating devices in connection with dosage of oxygen.

This object is achieved with a wine aerating device according to claim 1.

The wine aerating device according to the invention comprises a body member, adapted to hold a container containing pressurized gas and a diffusion member for diffusing pressurized gas into a wine to be aerated, the body member being provided with a passage for passing a flow of pressurized gas from the container to the diffusion member, and a control mechanism for providing a flow of pressurized gas from the body member to the diffusion member over a manually settable length of time.

The control mechanism comprises a valve, the valve being adapted to be manually opened and/or closed by rotary movement of a collar provided on the body member.

Manual actuation of a valve of a control mechanism allowing flow of pressurized gas into the wine to be aerated by means of a rotary movement of a collar ensures easy handling. Furthermore, by such rotary movement, the valve can easily be opened or closed, providing a reliable and robust means for dosage of oxygen.

Preferably, there is provided a spring mechanism providing a biasing force acting on the collar. By means of such a biasing force, it can be ensured that the valve, having been manually opened by rotary movement of the collar, is automatically urged back into its closed position after termination of manual actuation.

According to a preferred embodiment of the device according to the invention, the valve defines a closed position, preventing flow of pressurized gas, and an open position, allowing flow of pressurized gas, the valve being adapted for manual actuation of the collar to move it from the closed into the open position, and after termination of manual actuation for the spring mechanism acting on the collar to urge the valve back into its closed position. By means of such a spring, the time required for the valve to return from an open position to the closed position can be predetermined, thus providing an effective means of dosage of oxygen.

According to a preferred embodiment, there is provided an inlet channel and an outlet channel within the body member, the valve being provided between the inlet channel and the outlet channel, the valve comprising an eccentric groove provided in the rotary collar, manual actuation of the collar rotating the eccentric groove such that it provides a communication between the inlet channel and the outlet channel, allowing flow of pressurized gas from the inlet channel to the outlet channel. After termination of the manual actuation, the spring urges the groove back into a rotary position corresponding to the closed position of the valve, in which flow of pressurized gas is prevented.

The provision of such an eccentric groove in combination with a spring biased rotary collar provides a robust and reliable dosage means, as the duration of time before the valve moves from an open position back into the closed position can easily be set by a corresponding amount of rotary movement of the collar. For example, if the collar is manually rotated by 180°, the valve can be in its open position for about twice as long compared to a rotary movement by 90°. Also, such an eccentric groove allows continuous setting of a desired duration of time, during which the valve shall remain in its open position.

Advantageously, the device is provided with a damping mechanism. Such a damping mechanism can, for example, be provided as a rotary damper, utilizing voids filled with viscous fluid, for example silicone oil.

Such a damping mechanism counteracts the biasing force of the spring thus providing a slow adjustable linear reaction. Depending on the biasing force exerted by the spring and the damping force exerted by the damping mechanism, various ranges, within which opening durations of the valve can be set, can be provided.

Advantageously, the damping mechanism is provided with a toothed gear, which engages with a corresponding toothed gear of the rotary collar. Hereby, a direct and thus mechanically reliable connection between the rotary movement of the collar and the damping mechanism is provided.

Advantageously, the device according to the invention is provided with a gauge mechanism. Such a gauge mechanism allows easy setting and reading of a measure of rotation or movement of the collar. Advantageously, such a gauge mechanism can be provided with a scale indicating time durations, during which the valve will remain in its open position, and/or corresponding amounts of oxygen flowing through the valve.

The invention will now be further described with reference to the following figures, in which:
Figure 1 shows a plan view of a preferred embodiment of an aerator device according to the invention,
Figure 2 shows a plan view of a preferred embodiment of a body member of an aerator device according to the invention,
Figure 3 shows a sectional view of the body member of figure 2, along cutting plane line A-A of figure 2,
Figure 4 shows an enlarged view of section C of figure 3, showing the valve in a closed position,
Figure 5 shows section C of figure 2 in an open position of the valve,
Figure 6 shows a sectional view along cutting plane line B-B of figure 3,
Figure 7 shows an enlarged view of a damping mechanism used in connection with the present invention, and
Figure 8 shows a sectional view along cutting plane line A-A of figure 7.

The aerating device shown in the figures comprises a body member 10 adapted to hold a gas cylinder 12 and a diffusion member 14. In the embodiment shown, the diffusion member 14 is provided as a diffusion lance comprising a tube 17, which connects to body member 10, and a diffuser body 18.

The lance is arranged downstream of the body member 10. Here and in the following, the term "downstream" shall mean towards the diffusion member end of the gas path, and the term "upstream" towards the cylinder or handle end of the gas path.

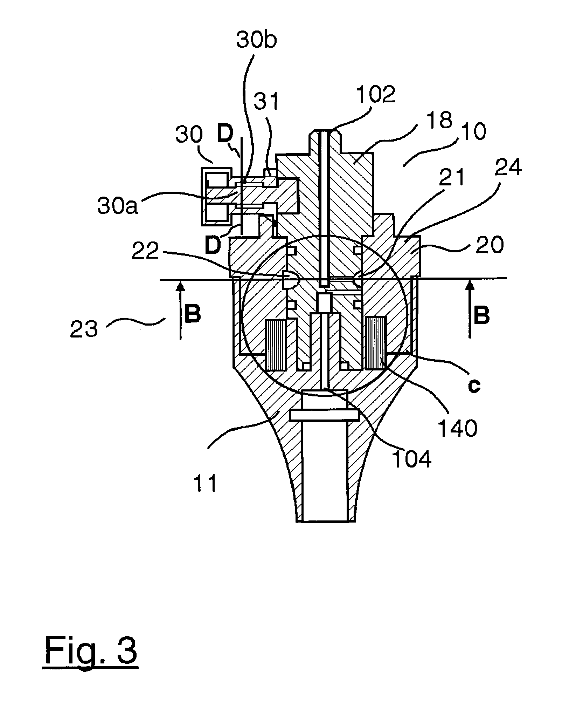

The body number 10 comprises a core part 18, a collar 20, which is manually rotatable about the core part 18, and an interface 11 (see especially Figure 3).

In use, the device is arranged to engage with the neck of a wine bottle, which e.g. has a fluid content of 75cl (not shown), via the interface 11.

The interface 11 also connects the body member 10 to diffusion member 14. The interface 11 forms a conical shape, which is dimensioned to fit inside or on the neck of a wine bottle.

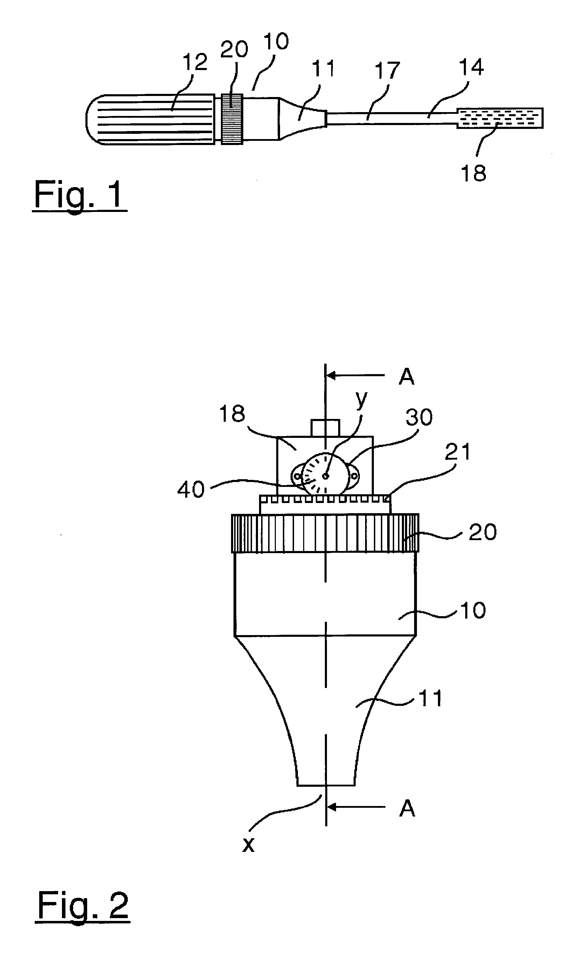

The core part 18 is provided in a rotationally fixed manner with respect to interface 11. The collar 20 is rotatable relative to core part 18 and interface 11 about a longitudinal axis X indicated in figure 2. The collar 20 is part of a control mechanism 23 for providing a flow of pressurized gas (received from gas cylinder 12) from the body member 10 to diffusion member 14, which will now be further explained with reference to figures 2 to 7.

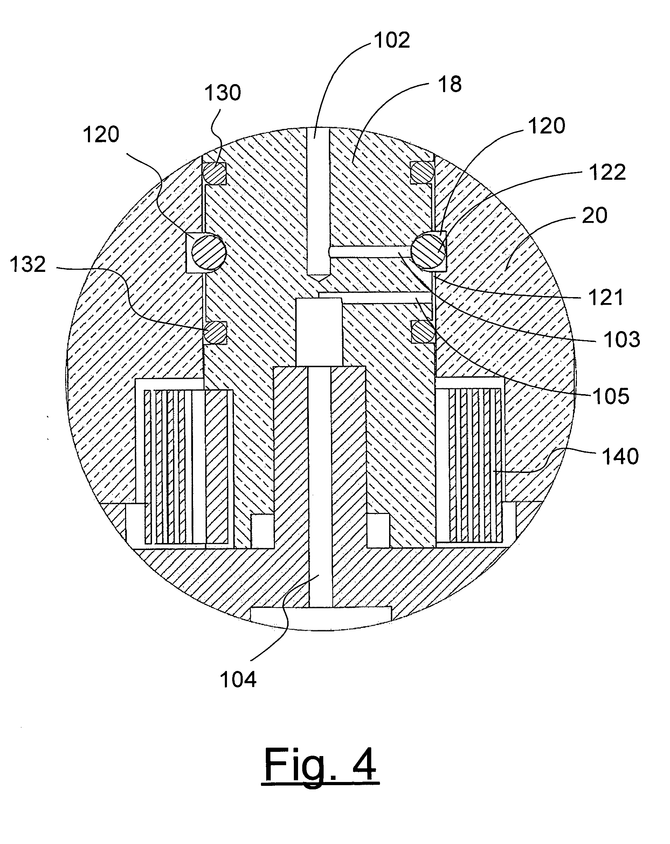

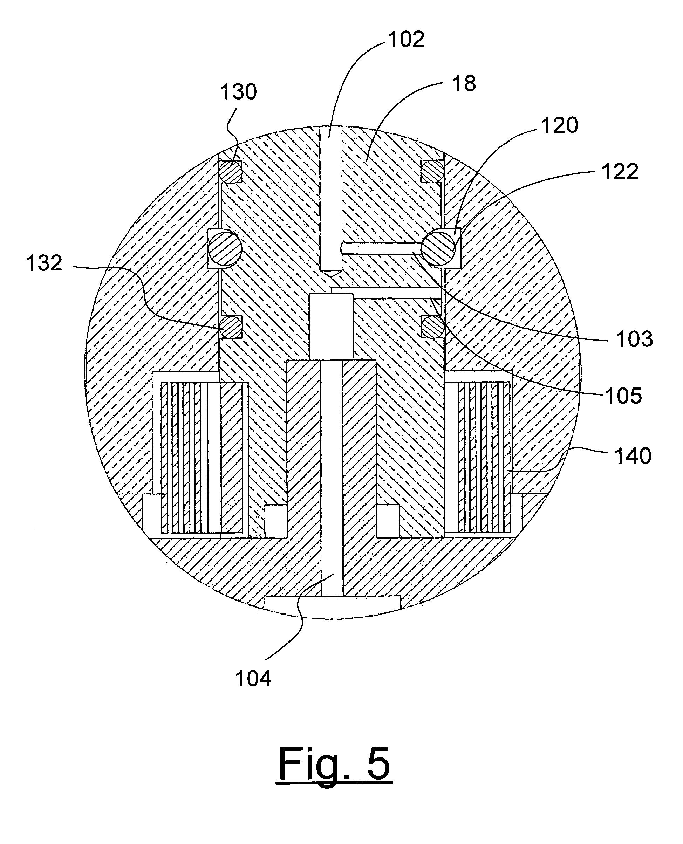

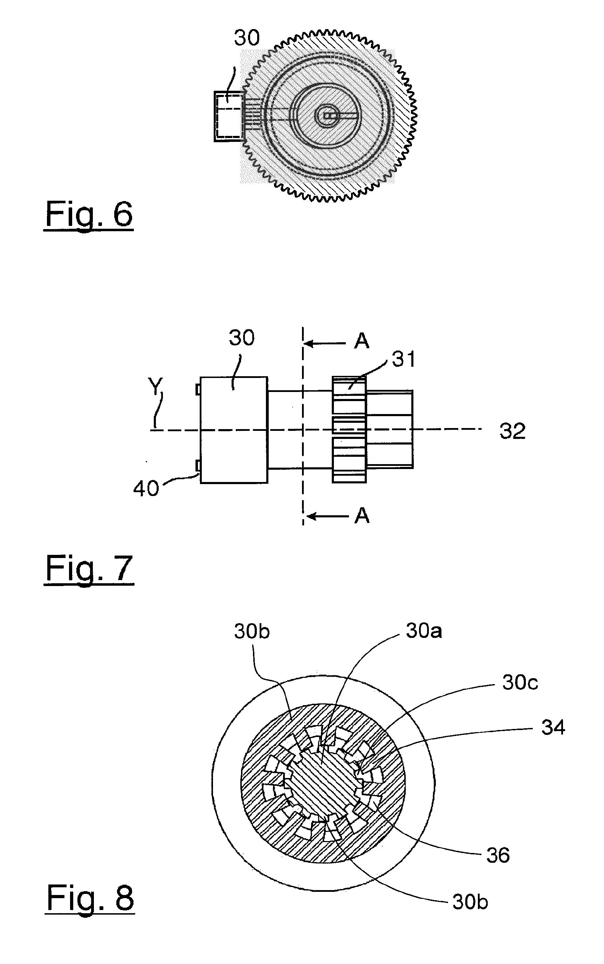

Figure 2 shows a preferred embodiment of a body member 10, which can be used in connection with the aerating device of figure 1. Figure 3 shows a sectional view along line A-A of figure 2. Figures 4 and 5 show section C of figure 3 in an enlarged view. Figure 6 shows a sectional view along line B-B of figure 3. Figure 7 and 8 show further details relating to a damper mechanism and a gauge member, which will be further explained below.

The body member 10 is provided with an inlet channel 102 within core part 18 communicating with gas cylinder 12, and with an outlet channel 104 within interface 11, communicating with diffusion member 14. Between inlet channel 102 and outlet channel 104, there is provided a valve, generally designated 24, which is also part of the control mechanism 23. The valve 24 is provided in section C of the body member, which is shown in greater detail in figures 4 and 5.

Inlet channel 102 is provided with an inlet branch-off 103, which is in communication with an eccentric groove 120 formed on the inside of collar 20 (see figures 4 and 5). Eccentric groove 120 communicates with an annular gap 121 provided between core part 18 and collar 20. Annular gap 121 communicates with a branch-off 105 of outlet 104.

In the positions shown in figure 4, any flow of pressurized gas from inlet 102 to outlet 104 is prevented by an O-ring 122 provided in eccentric grove 120, which is in a state of compression due to the dimensioning of eccentric groove 120. As can be seen in figure 4, the width of eccentric groove 120 is somewhat larger in the region diametrally opposed to the branching-off channels 103, 105.

By rotating collar 20 about core part 18 (i.e. axis X), the section of eccentric groove 120 with greater width can be brought into alignment with branching-off channel 103. This situation is depicted in figure 5. It can be seen that O-ring 122 is no longer compressed and can be displaced in case of pressurized air impinging on it through inlet 102 and branching-off channel 103. Thus, in the situation depicted in figure 5, pressurized air from inlet 102 can pass through branching-off channel 103, eccentric groove 120, annular gap 121, branching-off channel 105 and into outlet 104, and thus into diffusor member 14.

In order to ensure a stable rotary movement of collar 20 relative to body member 10 and to provide a seal within annular gap 121, further O-rings 130,132 can be provided.

In principal, the collar 20 can be manually held in the position shown in figure 5 as long as a user wishes, and then be manually rotated back into the position shown in figure 4.

However, it is preferable to make use of a spring mechanism 140 provided between core part 18 and collar 20, which urges the collar back from the open valve position shown in figure 5 to the closed valve position shown in figure 4. By means of this spring mechanism acting on rotary collar 20 to provide a biasing force, and urging it back into the valve closed position, a duration of time, during which the valve 23 shall be in its open position, can easily be set depending on the extent of rotary displacement of the collar 20.

In order to achieve greater flexibility in connection with setting specific time durations, during which the valve remains open a damper mechanism 30 is provided, which will be explained in the following. By means of such a damper mechanism the range of time, over which the valve can remain in its open state, can be significantly extended and/or more exactly set.

The damper mechanism 30 comprises a non-rotary central member 30a, and a rotary member 30b, rotatable about non-rotatable member 30a (see figure 7). On its outside, rotary member 30b is provided with a toothed gear 31 (see figure 7). Toothed gear 31 engages a toothed gear 21 provided on rotary collar 20 (see figure 3). On its inside, rotatable member 30b is provided with damper vanes 34, with corresponding voids 36 therebetween.

Non-rotatable member 30a is provided in a toothed manner, with teeth 30b and corresponding voids 30c therebetween. Voids 36 and voids 30c are filled with a viscous fluid, for example silicone oil.

In case of collar 20 being manually actuated (rotated), a corresponding rotary movement of rotary member 30b is effected via the interaction between toothed gears 21, 31. After termination of manual actuation, the interaction between damper vanes 34 and the viscous fluid provided in voids 30c, 36 counteracts the biasing force of spring 140, thus slowing down movement of the rotary collar 20 and thus valve 23 back into its closed position.

The axis of rotation of toothed gear 21 and thus rotary member 30a (designated Y in figures 2 and 7) is vertical to the axis of rotation X of toothed gear 21 provided on the rotary collar 20.

Preferably, the damping action is provided to be directionally unilateral, e.g. by providing a (not shown) ratchet mechanism.

Preferably a gauge 40 is provided on the face of the damping mechanism (see figures 2 and 7), which is visible to a user. By using such a gauge provided with an expediently chosen scale (e. g. time scale), a desired duration during which the valve remains open can easily be set. The calibrated scale may also be provided around the manual actuating collar.

## Claims

1. Wine aerating device comprising a body member (10), adapted to hold a container (12) containing pressurized gas and a lance member (14) for diffusing pressurized gas into a wine to be aerated, the body member (10) being provided with a passage (102, 103, 121, 105, 104) for passing a flow of pressurized gas from the container (12) to the lance member (14), comprising a control mechanism (23) for providing a flow of pressurized gas from the body member (10) to the lance member (14) over a variable length of time, the duration of which can be manually set by a user,
**characterized in that** the control mechanism (23) comprises a valve (24), the valve being adapted to be manually actuated by rotary movement of a collar (20) provided on body member (10).

2. Device according to claim 1, wherein there is provided a spring mechanism (140) providing a biasing force acting on the collar (20).

3. Device according to claim 2, wherein the valve (24) defines a closed position, preventing flow of pressurized gas, and an open position, allowing flow of pressurized gas, the valve being adapted for being actuated by rotary movement of the collar (20) from the closed position into the open position, and after termination of manual actuation to be urged back into the closed position by means of the spring mechanism (140) acting on the collar.

4. Wine aerating device according to any one of the preceding claims, wherein there is provided an inlet channel (102) and an outlet channel (104) in the body member, the valve (24) being provided between the inlet channel and the outlet channel, the valve comprising an eccentric groove (120) provided in the rotary collar (20), manual actuation of the collar rotating the eccentric groove such that it provides a communication between the inlet channel (102) and the outlet channel (104), allowing flow of pressurized gas from the inlet channel to the outlet channel.

5. Device according to any one of the preceding claims, comprising a damping mechanism.

6. Device according to claim 5, wherein the damping mechanism is provided with a toothed gear (21), which engages with a corresponding toothed gear (31) provided on the rotary collar (20).

7. Device according to claim any one of the preceding claims, provided with a gauge mechanism.

8. Device according to claim 7, wherein the gauge mechanism comprises a scale.

9. Device according to claim 8, wherein the scale is provided as a calibrated scale.
